# EUROPÄISCHE PATENTSCHRIFT

(11) **EP 3 838 634 B1**
(45) Veröffentlichungstag und Bekanntmachung des Hinweises auf die Patenterteilung: **25.01.2023**
(21) Anmeldenummer: 20210327.1
(22) Anmeldetag: 27.11.2020
(51) Int. Cl.: B60G 3/06, B60G 11/18, B60G 11/23, B60G 11/04

(54) **LÄNGSLENKERACHSE FÜR FAHRZEUGANHÄNGER**
TRAILING ARM AXLE FOR VEHICLE TRAILERS
ESSIEU À BRAS TIRÉS POUR REMORQUES DE VÉHICULE

(30) Priorität: 19.12.2019 DE 202019107121 U
(43) Veröffentlichungstag der Anmeldung: 23.06.2021
(73) Patentinhaber: Knott GmbH, D-83125 Eggstätt (DE)
(72) Erfinder: STRASSER, Josef, 83257 Gstadt am Chiemsee (DE); SIEBERT, Christian, 83209 Prien am Chiemsee (DE); KNOTT, Valentin, 83254 Breitbrunn am Chiemsee (DE); SZABO, Sandor H., 6078 JAKABSZÁLLÁS (HU)
(74) Vertreter: Flach Bauer & Partner Patentanwälte mbB

(56) Entgegenhaltungen:
- EP-A1- 0 296 568
- WO-A1-2009/140772
- CN-Y- 201 287 600
- DE-A1-102015 106 739
- DE-U- 1 677 755
- DE-U- 1 769 685
- DE-U- 1 795 600
- DE-U- 1 805 003
- DE-U- 1 853 480
- DE-U1- 8 025 819
- DE-U1-202008 003 758
- DE-U1-202008 006 329
- FR-A- 890 324
- FR-A- 1 375 225
- FR-A1- 2 523 522
- FR-A6- 2 053 490
- GB-A- 602 892
- JP-U- H0 625 634
- JP-U- S60 159 207
- JP-U- S60 159 208

## Beschreibung

Die Erfindung betrifft eine Längslenkerachse für Fahrzeuganhänger gemäß dem Oberbegriff des Anspruchs 1.

Längslenkerachsen für Fahrzeuganhänger sind beispielsweise in der Form von Gummifederachsen bekannt. Derartige Längslenkerachsen weisen ein Achsrohr und mindestens eine im Achsrohr begrenzt drehbare Schwingwelle auf, die sich in das Achsrohr hinein oder durch dieses hindurch erstreckt. An einem äußeren Kopplungsabschnitt der Schwingwelle, der stirnseitig über das Achsrohr vorsteht, ist ein Ende eines Schwinghebels befestigt, der an seinem anderen Ende ein Achselement für ein Laufrad trägt. Achsrohr und Schwingwelle weisen in der Regel polygonale, beispielsweise viereckige Querschnitte auf, wobei in Zwischenräumen zwischen dem Achsrohr und der Schwingwelle schnur- oder stabförmige Elastomerelemente angeordnet sind, die bei einer Drehung der Schwingwelle im Achsrohr verformt werden und einen federnden Drehwiderstand bilden.

Dieses Prinzip erfordert, dass der Schwinghebel derart mit der Schwingwelle verbunden ist, dass sowohl die auftretenden Drehmomente übertragen als auch Seitenkräfte aufgenommen werden können, die beispielsweise bei Kurvenfahrten entstehen.

Zur drehfesten Verbindung des Schwinghebels mit der Schwingwelle ist es bekannt, im Schwinghebel eine an die Außenkontur der Schwingwelle angepasste Durchtrittsöffnung vorzusehen, durch welche ein Endabschnitt der Schwingwelle hindurchgesteckt wird. Der Schwinghebel wird meist mit zwei Schweißnähten innen und außen mit der Schwingwelle verschweißt. Nachteilig ist hierbei jedoch, dass durch die dabei auftretenden Schweißeigenspannungen und die oft unvermeidlichen Schweißkerben das Schwingwellenprofil im Bereich seiner höchsten Beanspruchung geschwächt wird.

Aus der DE 1853480 U ist eine Längslenkerachse gemäß dem Oberbegriff des Anspruchs 1 bekannt. Der Schwinghebel ist dort an einer Lagerhülse befestigt, die formschlüssig über eine Verzahnung mit einer weiteren Hülse verbunden ist, die wiederum über eine Verzahnung formschlüssig mit einem Kopf einer Schwingquelle verbunden ist.

Die JP S60-159208 U zeigt eine Keilwellenverbindung zur Drehmomentübertragung zwischen einem Hebel und einer Welle.

Die WO 2009/140772 A1 zeigt eine konische Verbindung zwischen einer Schwingwelle und einem aus einem Vollmaterial bestehenden Schwinghebel. Die Drehmomentübertragung erfolgt dort über Verriegelungselemente, die in Hohlräumen der Schwingwelle einerseits und des Schwinghebels andererseits angeordnet sind.

Die EP 0296568 A1 zeigt ein aus Blechprofilen bestehendes Radachsenteil mit einer hülsenförmigen Nabe, die an ihren Enden in einem zylinderförmigen Aufnahmeraum des Radachsenteils eingeschweißt ist.

Der Erfindung liegt die Aufgabe zugrunde, eine Längslenkerachse gemäß dem Oberbegriff des Anspruchs 1 zu schaffen, die auf möglichst einfache Weise eine Schwächung der Schwingwelle durch Schweißnähte im Befestigungsbereich des Schwinghebels vermeidet und eine besonders gute Übertragung der Drehmomente und Seitenkräfte vom Schwinghebel auf die Schwingwelle gewährleistet.

Diese Aufgabe wird erfindungsgemäß durch eine Längslenkerachse gemäß den Merkmalen des Anspruchs 1 gelöst. Vorteilhafte Ausführungsformen der Erfindung sind in den weiteren Ansprüchen beschrieben.

Bei der erfindungsgemäßen Längslenkerachse gemäß Anspruch 1 ist der Schwinghebel mittels einer am Schwinghebel befestigten Presshülse, die eine sich in Richtung des benachbarten Endes der Schwingwelle verjüngende Durchtrittsöffnung aufweist und mit Presssitz auf den Kopplungsabschnitt der Schwingwelle aufgesetzt ist, durch eine Kraftschlussverbindung drehfest mit der Schwingwelle verbunden.

Erfindungsgemäß wird somit ein Pressverband zwischen der Schwingwelle einerseits und der mit dem Schwinghebel fest verbundenen Presshülse andererseits geschaffen. Die Durchtrittsöffnung ist derart ausgebildet, dass die Presshülse bei der Montage zunächst mit einem ersten Abschnitt, der auch als Einführabschnitt bezeichnet werden kann und eine Rundung am Beginn der Durchtrittsöffnung aufweist, vorzugsweise mit geringem Spiel auf die Schwingwelle aufgesteckt werden kann. Die Länge dieses ersten Abschnitts ist im Vergleich zur Gesamtlänge der Durchtrittsöffnung kurz und beträgt vorzugsweise 5 bis 15 % der Gesamtlänge der Durchtrittsöffnung. Der Einführabschnitt ermöglicht ein einfaches Ansetzen der Presshülse an der Schwingwelle bei Beginn des Montagevorgangs und vermeidet beim weiteren Aufschieben der Presshülse auf die Schwingwelle eine Beschädigung der Schwingwelle durch eine scharfe vordere Kante der Presshülse. Der Einführabschnitt geht dann vorzugsweise kontinuierlich durch eine Verringerung des Durchmessers (d.h. der lichten Weite) der Durchtrittsöffnung in einen Haupt- oder Pressabschnitt über, in welchem sich die Durchtrittsöffnung zunehmend und vorzugsweise stetig und gleichmäßig leicht verjüngt und der Durchmesser der Durchtrittsöffnung geringer ist als der Außendurchmesser des Kopplungsabschnitts der Schwingwelle, wodurch die Presshülse mittels Presssitz drehfest und axialfest mit der Schwingwelle verbunden ist. Die Länge dieses Hauptabschnitts beträgt vorzugsweise 75 bis 95 % der Gesamtlänge der Durchtrittsöffnung. Hierdurch wird eine Kraftschlussverbindung geschaffen, über die die Drehmomente und Seitenkräfte vom Schwinghebel auf die Schwingwelle übertragen werden, ohne dass hierzu eine Schweißnaht in einem kritischen Bereich der Schwingwelle erforderlich wäre. Die Verjüngung des Durchmessers der Durchtrittsöffnung ermöglicht ein problemfreies Aufschieben der Presshülse auf die Schwingwelle und gewährleistet eine besonders gute Übertragung der Presskraft über die gesamte Länge des Hauptabschnitts der Durchtrittsöffnung.

Aufgrund des erfindungsgemäßen Pressverbands kann insbesondere auf die Schweißnaht auf der Innenseite des Schwinghebels zwischen der Schwingwelle und dem Schwinghebel verzichtet werden. Die Schwingwelle wird in diesem Bereich daher nicht durch Schweißspannungen, Materialversprödung oder Schweißkerben geschwächt.

Vorzugsweise ist die Durchtrittsöffnung zumindest überwiegend konisch oder keilförmig.

Gemäß einer besonders vorteilhaften Ausführungsform weist der Kopplungsabschnitt der Schwingwelle eine polygonale Außenkontur auf, wobei die Durchtrittsöffnung eine an diese Außenkontur angepasste polygonale Kontur aufweist, derart, dass der Schwinghebel mittels der Presshülse sowohl durch eine Kraftschlussverbindung als auch durch eine Formschlussverbindung drehfest mit der Schwingwelle verbunden ist.

"Polygonal" im Sinne der vorliegenden Erfindung ist im weitesten Sinne zu verstehen und umfasst insbesondere Querschnittsformen der Schwingwelle und der Durchtrittsöffnung, die im Querschnitt eine gerundete Polygonform haben, d.h. bei der die Ecken bzw. Kanten gerundet sind. Vorzugsweise sind die polygonalen Konturen vier- oder dreieckige Konturen. Andere Profilierungen für eine formschlüssige Verbindung zwischen Schwingwelle und Presshülse sind ebenfalls möglich, beispielsweise Keilwellenprofile. Die Formschlussverbindung unterstützt die Kraftschlussverbindung bei der Übertragung der Drehmomente und Seitenkräfte.

Zweckmäßigerweise ist auch bei Vorhandensein einer Formschlussverbindung eine äußere Schweißnaht zwischen Presshülse und Schwingwelle vorgesehen, wobei diese äußere Schweißnaht den Pressverband primär gegen axiale Kräfte und gegen ein Lösen des Pressverbands sichert.

Vorzugsweise geht die Durchtrittsöffnung in einem axialen Endabschnitt, der einen axial äußeren Endbereich der Schwingwelle umgibt, in eine Fase über, die zum Anbringen einer versenkten Schweißnaht ausgebildet ist.

Vorteilhafterweise ist die Durchtrittsöffnung in einem Endabschnitt mittels eines radial nach innen vorstehenden Bunds verengt, der einen an einer Stirnfläche der Schwingwelle anliegenden Axialanschlag für die Schwingwelle bildet. Ein derartiger Axialanschlag sichert die Presshülse in einer axialen Richtung und definiert in eindeutiger Weise diejenige Strecke, über welche die Presshülse axial auf die Schwingwelle aufgeschoben werden soll.

Vorteilhafterweise ist die Presshülse mittels einer stirnseitig in die Schwingwelle eingeschraubten Sicherungsschraube, die in Axialrichtung auf die Presshülse eine Druckkraft ausübt, axial gesichert. Weist die Presshülse einen als Axialanschlag für die Schwingwelle dienenden Bund auf, kann dieser zwischen der Stirnfläche der Schwingwelle und der Sicherungsschraube eingeklemmt werden, so dass die Presshülse in beiden axialen Richtungen gesichert ist. In diesem Fall ist auch eine Schweißnaht auf der Außenseite der Presshülse im Bereich der Schwingwelle überflüssig.

Vorzugsweise weist die Sicherungsschraube ein selbstschneidendes oder selbstfurchendes Gewinde zum Einschrauben in die Schwingwelle auf. Dies ist insbesondere dann vorteilhaft, wenn die Schwingwelle als Hohlwelle ausgebildet ist.

Vorzugsweise durchdringt die Presshülse den Schwinghebel und ist mit diesem verschweißt. Alternativ hierzu sind jedoch auch andere Verbindungsverfahren zwischen Presshülse und Schwinghebel denkbar, beispielsweise indem die Presshülse einen Flansch aufweist, der mit dem Presshebel verschraubt ist.

Vorzugsweise weist die Presshülse in einem Endabschnitt einen radial nach außen vorstehenden Bund auf, der einen Begrenzungssteg für eine Schweißnaht zwischen der Presshülse und dem Schwinghebel bildet.

Die Erfindung wird nachfolgend anhand der Zeichnungen beispielhaft näher erläutert. Es zeigen:
- Figur 1:: eine räumliche Darstellung einer Längslenkerachse in Form einer Gummifederachse;
- Figur 2:: einen Querschnitt durch die Längslenkerachse von Figur 1;
- Figur 3:: einen Längsschnitt durch einen Endbereich einer Schwingwelle sowie durch eine Presshülse und einen Teil eines Schwinghebels gemäß einer ersten Ausführungsform der Erfindung;
- Figur 4:: eine Ansicht der Presshülse von Figur 3 schräg von oben;
- Figur 5:: die Presshülse von Figur 4 schräg von unten;
- Figur 6:: einen Längsschnitt durch die Presshülse der Figuren 4 und 5;
- Figur 7:: eine räumliche Ansicht des Endbereichs der Schwingwelle mit montiertem Schwinghebel schräg von außen;
- Figur 8:: eine Ansicht der Schwingwelle und des Schwinghebels schräg von innen;
- Figur 9:: einen Längsschnitt durch einen Endbereich der Schwingwelle sowie einer Presshülse und eines Teils eines Schwinghebels gemäß einer zweiten Ausführungsform der Erfindung;
- Figur 10:: die Presshülse von Figur 9 schräg von oben;
- Figur 11:: die Presshülse von Figur 9 schräg von unten;
- Figur 12:: einen Längsschnitt durch die Presshülse der Figuren 10 und 11;
- Figur 13:: eine Draufsicht auf eine Sicherungsschraube;
- Figur 14:: einen Längsschnitt durch die Sicherungsschraube von Figur 13;
- Figur 15:: einen Endbereich der Schwingwelle und den Schwinghebel in montiertem Zustand schräg von außen; und
- Figur 16:: eine Ansicht der Elemente von Figur 15 schräg von innen.

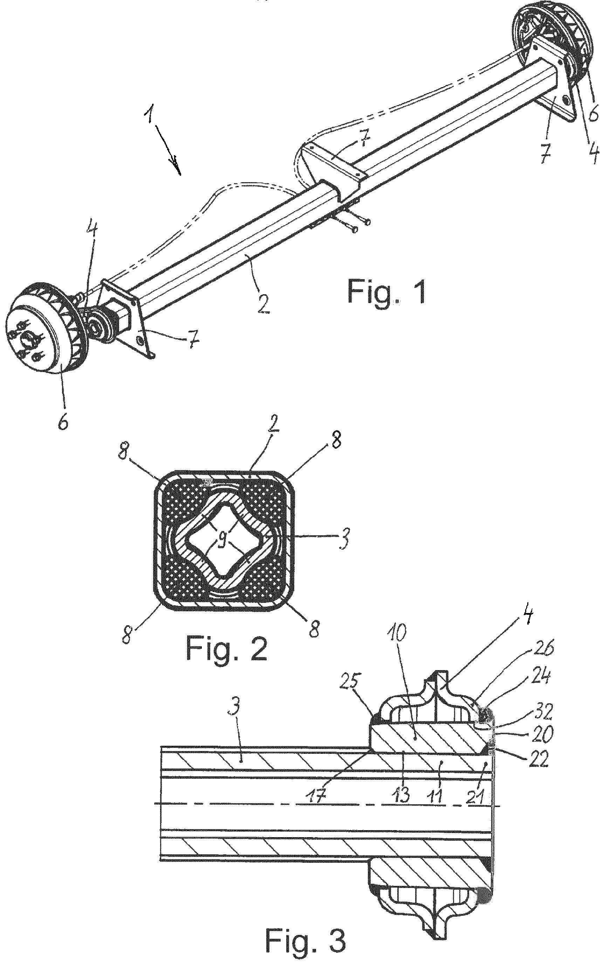

Aus Figur 1 ist eine Längslenkerachse 1 in Form einer Gummifederachse für Fahrzeuganhänger ersichtlich. Der Begriff "Gummifederachse" ist hierbei im weitesten Sinn verstehen und soll nicht nur Achsen umfassen, die Federelemente aus Gummi aufweisen, sondern auch Federelemente aus allen möglichen elastomeren Materialien.

Die Längslenkerachse 1 umfasst ein äußeres Achsrohr 2 und eine Schwingwelle 3, die sich durch das Achsrohr 2 hindurch erstreckt und über einen begrenzten Winkelbereich drehbar ist. Die beiden Endbereiche der Schwingwelle 3 ragen axial über das Achsrohr 2 hinaus, wobei an jedem Ende der Schwingwelle 3 ein Schwinghebel 4 drehfest befestigt ist.

Anstelle einer einzelnen durchgehenden Schwingwelle 3 ist es auch möglich, zwei voneinander getrennte Schwingwellen 3 innerhalb des Achsrohrs 2 vorzusehen. Die beiden Schwingwellen 3 sind in diesem Fall von gegenüberliegenden Seiten her in das Achsrohr 2 derart eingeführt, dass ein außenliegendes Ende jeder Schwingwelle 3 axial über das Achsrohr 2 vorsteht und als Träger für einen Schwinghebel dient. Zwei voneinander getrennte Schwingwellen 3 bieten den Vorteil, dass sie innerhalb des Achsrohrs 2 unabhängig voneinander drehbar sind, so dass die links- und rechtsseitige Federung unabhängig voneinander arbeiten kann.

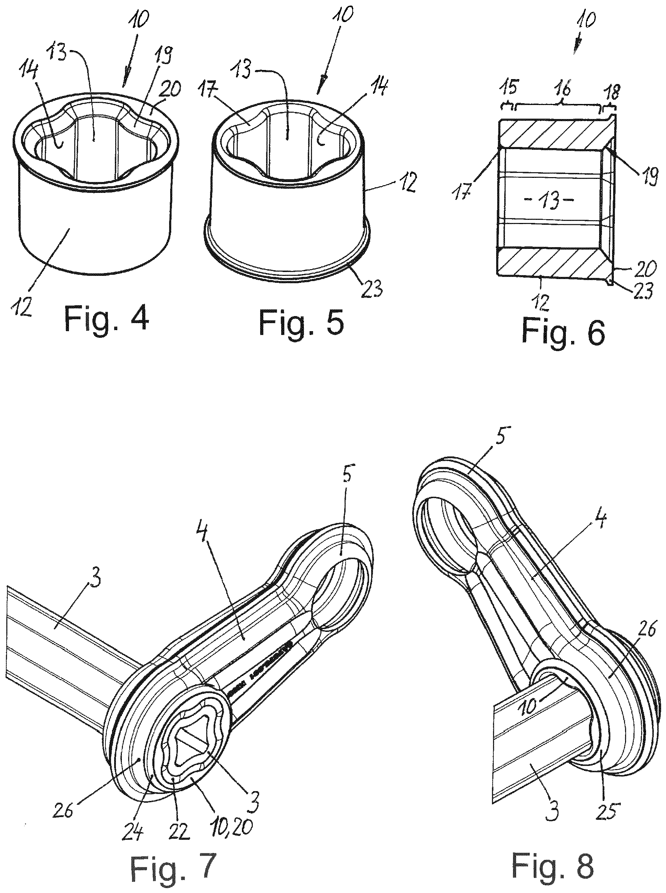

Das freie Ende 5 jedes Schwinghebels 4 (Figur 7 und 8) dient in bekannter Weise zur Befestigung eines nicht näher dargestellten Achsstummels, auf dem eine Bremstrommel 6 (Figur 1) gelagert ist.

Aus Figur 2 ist ersichtlich, dass das äußere Achsrohr 2 eine viereckige, quadratische Querschnittsform hat. Die vier Ecken oder Kanten des Achsrohrs 2 sind abgerundet und weisen einen vorbestimmten Radius auf. Auf dem Achsrohr 2 sind ferner Auflager 7 befestigt, an denen nicht gezeigte Tragholme eines Fahrgestells befestigt werden können.

Figur 2 zeigt weiterhin, dass die Schwingwelle 3 mittels vier Elastomerelementen 8 innerhalb des Achsrohrs 2 federnd gelagert ist. Bei den Elastomerelementen 8 handelt es sich um schnur- oder stabförmige, im unbelasteten Zustand insbesondere zylinderförmige Elastomerelemente, die sich längs der Schwingwelle 3 zumindest über einen wesentlichen Teil der Länge der Schwingwelle 3 erstrecken, wobei sie parallel zur Längsachse des Achsrohr 2 in dessen Ecken angeordnet sind.

Die Schwingwelle 3 hat ebenfalls eine viereckige Querschnittsform, die im weitesten Sinne als quadratisch bezeichnet werden kann. Im gezeigten Ausführungsbeispiel ist die Schwingwelle 3 als Hohlwelle ausgebildet. Alternativ kann sie jedoch aus Vollmaterial bestehen. Die Wandbereiche 9 zwischen den vier abgerundeten Ecken sind konkav nach innen gekrümmt, so dass die vier Außenflächen zwischen den Ecken in Längsrichtung der Schwingwelle 3 verlaufende Vertiefungen aufweisen. Diese Vertiefungen dienen jeweils als Sitze für die Elastomerelemente 8.

Bei einem Einfedervorgang dreht sich die Schwingwelle 3 innerhalb des Achsrohrs 2, wodurch die Elastomerelemente 8 in bekannter Weise verformt werden und eine entsprechende Federkraft erzeugen.

Anhand der Figuren 3 bis 8 wird im Folgenden eine erste Ausführungsform eines erfindungsgemäßen Pressverbands beschrieben, mit dem der Schwinghebel 4 dreh- und axialfest an der Schwingwelle 3 befestigt werden kann.

Hierfür wird eine Presshülse 10 verwendet, die mit Presssitz auf einen Kopplungsabschnitt 11 der Schwingwelle 3 aufgesetzt ist, so dass zwischen Presshülse 10 und Schwingwelle 3 eine Kraftschlussverbindung zur Übertragung der Drehmomente und Seitenkräfte geschaffen wird.

Der Kopplungsabschnitt 11 der hohlen Schwingwelle 3 besteht im gezeigten Ausführungsbeispiel aus einem Endabschnitt der Schwingwelle 3, der seitlich über das äußere Achsrohr 2 hinausragt. Weiterhin hat im gezeigten Ausführungsbeispiel der Kopplungsabschnitt 11 die gleiche Außen- und Innenkontur wie die übrigen Abschnitte der Schwingwelle 3. Die Schwingwelle 3 hat insbesondere das in Figur 2 dargestellte Profil, d.h. ein im Querschnitt viereckiges Profil mit abgerundeten Ecken bzw. Kanten. Andere Profile sind ohne weiteres möglich, beispielsweise dreieckige Profile mit abgerundeten Ecken bzw. Kanten, zylindrische Profile oder nicht hohl, sondern aus Vollmaterial. In Längsrichtung weist der Kopplungsabschnitt 11 einen konstanten Außendurchmesser auf.

In den Figuren 4 bis 6 ist die Presshülse 10 in Einzeldarstellung gezeigt. Die Presshülse 10 weist eine zylindrische Außenumfangsfläche 12 auf, an der sie mit dem Schwinghebel 4 verschweißt ist. Anders gestaltete Außenumfangsflächen bzw. Außenkonturen sind ohne weiteres möglich.

Eine axiale Durchtrittsöffnung 13 der Presshülse 10, die zum Hindurchführen der Schwingwelle 3 dient, weist eine polygonale Kontur 14 auf, die der polygonalen Außenkontur des Kopplungsabschnitts 11 der Schwingwelle 3 entspricht und daher ebenfalls viereckig mit abgerundeten Ecken bzw. Kanten ausgebildet ist. Hierdurch wird eine Formschlussverbindung zwischen Schwingwelle 3 und Presshülse 10 geschaffen, welche ein Verdrehen des Schwinghebels 4 relativ zur Schwingwelle 3 verhindert.

Die Presshülse 10 weist einen Einführabschnitt 15 auf. Dort beginnt die Durchtrittsöffnung 13 mit einer Rundung 17. Diese verhindert, dass beim Aufschieben der Presshülse 10 auf die Schwingwelle 3 die Schwingwelle 3 durch eine scharfe vordere Kante der Presshülse 10 beschädigt wird.

An den Einführabschnitt 15 schließt ein Haupt- oder Pressabschnitt 16 der Presshülse 10 an. Der Durchmesser der Durchtrittsöffnung 13 entspricht am Anfang dieses Hauptabschnitts 16 in unmittelbarer Nachbarschaft zur Rundung 17 zunächst vorzugsweise dem Außendurchmesser des Kopplungsabschnitts 11 und verringert sich kontinuierlich längs des Hauptabschnitts 16 in Richtung des der Rundung 17 gegenüberliegenden Endes der Presshülse 10. Die Durchmesserverringerung (Verringerung der lichten Weite) der Durchtrittsöffnung 13 ist derart, dass der Hauptabschnitt 16 vorzugsweise über seine gesamte Länge mit Presssitz auf dem Kopplungsabschnitt 11 der Schwingwelle 3 aufsitzt. Hierdurch wird zusätzlich zur Formschlussverbindung eine Kraftschlussverbindung zwischen Presshülse 10 und Schwingwelle 3 geschaffen, die einen wesentlichen Teil der Drehmomente übertragen kann, welche der Schwinghebel 4 auf die Schwingwelle 3 ausübt. Die Länge des Hauptabschnitts 16 beträgt vorzugsweise 75% - 95% der Gesamtlänge der Presshülse 10.

Die Presshülse 10 weist weiterhin einen an den Hauptabschnitt 16 angrenzenden Endabschnitt 18 auf. In diesem Endabschnitt 18 ist eine Fase 19 vorgesehen, die sich zur Stirnfläche 20 der Presshülse 10 hin erweitert. Im montierten Zustand umgibt die Fase 19 den axial äußersten Endbereich 21 der Schwingwelle 3. Mittels der Fase 19 kann eine Schweißnaht 22 zwischen Presshülse 10 und der Schwingwelle 3 (Figur 3) versenkt angebracht werden, so dass die Schweißnaht 22 nicht über die Stirnfläche der Schwingwelle 3 und Presshülse 10 vorsteht. Die Schweißnaht 22 legt die Presshülse 10 zusätzlich in axialer Richtung an der Schwingwelle 3 fest, wird jedoch zum Übertragen von Drehmomenten nicht benötigt. Da die Schweißnaht 22 am äußersten Ende der Schwingwelle 3 angeordnet ist, ergibt sich keine Schwächung der Schwingwelle 3 in einem für die Übertragung der Drehmomente maßgebenden Abschnitt der Schwingwelle 3. Am gegenüberliegenden Ende der Presshülse 10 ist dagegen, wie aus Figur 3 ersichtlich, keine Schweißnaht zwischen der Presshülse 10 und der Schwingwelle 3 erforderlich, welche die Schwingwelle 3 schwächen könnte.

Die Presshülse 10 weist weiterhin, wie insbesondere aus Figur 6 erkennbar ist, im Endabschnitt 18 einen über die Außenumfangsfläche 12 radial nach außen vorstehenden Bund 23 auf, der einen Begrenzungssteg für eine Schweißnaht 24 (Figur 3) zwischen der Presshülse 10 und dem Schwinghebel 4 bildet. Der Bund 23 verhindert beim Schweißen ein Verlaufen des geschmolzenen Materials über die Stirnfläche der Presshülse 10 hinaus.

Wie aus Figur 3 ersichtlich, ist der Schwinghebel 4 auf seiner Innenseite mittels einer Schweißnaht 25 mit der Presshülse 10 verschweißt. Im gezeigten Ausführungsbeispiel besteht der Schwenkhebel 4 aus zwei Formteilen, die miteinander verschweißt sind und einen Befestigungsabschnitt 26 bilden, in dem eine Axialbohrung 32 zum Einführen der Presshülse 10 vorgesehen ist. Die Presshülse 10 ist etwas länger als die Breite des Befestigungsabschnitts 26, so dass die Presshülse 10 sowohl auf der Innenseite als auch auf der Außenseite etwas über den Schwinghebel 4 vorstehen kann. Dies ermöglicht es, dass die Schweißnähte 24, 25 auf der Außenumfangsfläche 12 der Presshülse 10 angeordnet sein können.

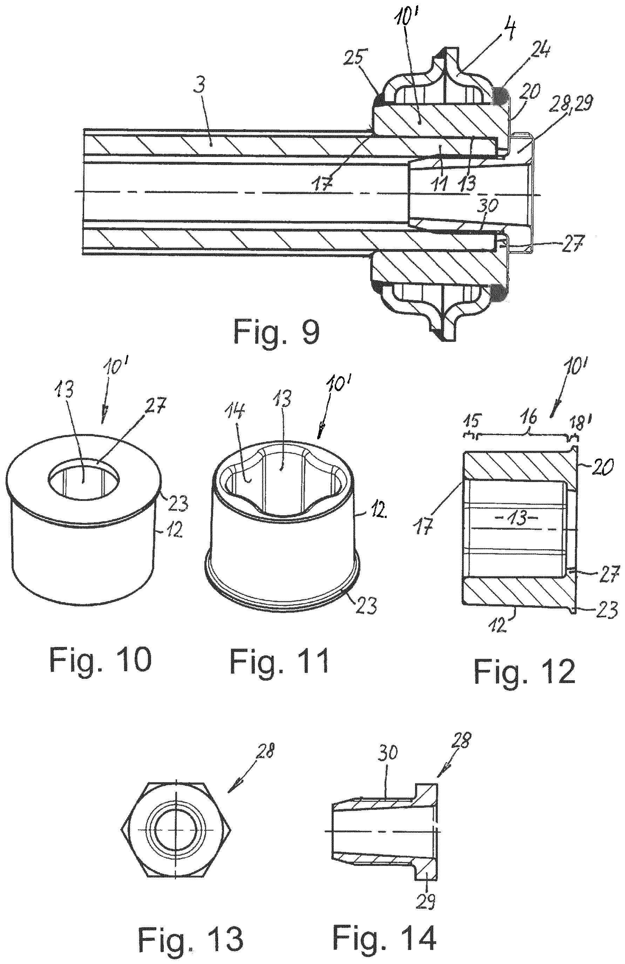

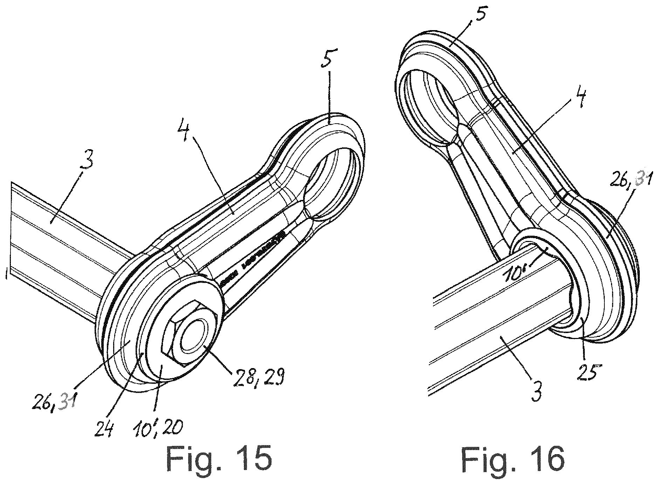

Anhand der Figuren 9 bis 16 wird im Folgenden eine zweite Ausführungsform des erfindungsgemäßen Pressverbands zwischen einer Presshülse 10' und der Schwingwelle 3 beschrieben. Die Schwingwelle 3, der Schwinghebel 4, die Schweißverbindung zwischen Schwinghebel 4 und Presshülse 10', der Einführabschnitt 15 und der Hauptabschnitt 16 der Presshülse 10' sowie die form- und kraftschlüssige Verbindung zwischen der Presshülse 10' und Schwingwelle 3 sind identisch zur ersten Ausführungsform, so dass zur Vermeidung von Wiederholungen auf die dortige Beschreibung verwiesen wird.

Im Unterschied zur ersten Ausführungsform weist die Presshülse 10' einen Endabschnitt 18' mit einem radial nach innen vorstehenden Bund 27 auf, der eine endseitige Durchmesserstufe für die Durchtrittsöffnung 13 bildet. Der Bund 27 bildet einen Axialanschlag für die Schwingwelle 3, an dem die Stirnfläche der Schwingwelle 3 anliegt.

Die Axialposition der Presshülse 10' auf der Schwingwelle 3 wird zusätzlich zum Presssitz mittels einer Sicherungsschraube 28 gesichert, die von der Stirnseite der hohlen Schwingwelle 3 her in diese eingeschraubt wird. Ein Schraubenkopf 29 übergreift dabei die Stirnfläche 20 der Presshülse 10' insbesondere im Bereich des Bundes 27. Der Bund 27 wird zwischen der Stirnfläche der Schwingwelle 3 und dem Schraubenkopf 29 eingeklemmt. Die Presshülse 10' ist dadurch zusätzlich in beiden axialen Richtungen festgelegt.

Die Sicherungsschraube 28 weist vorzugsweise ein selbstschneidendes oder selbstfurchendes Gewinde 30 auf, mit dem die Sicherungsschraube 28 an der Innenwand der Schwingwelle 3 fixiert wird. Alternative Sicherungselemente zur axialen Positionssicherung der Presshülse 10' sind ohne weiteres möglich, beispielsweise Sicherungsschrauben mit einem Gewinde, die in eine Gewindehülse eingeschraubt wird, welche mit Presssitz innerhalb des Hohlraums der Schwingwelle 3 festgelegt ist.

## Patentansprüche

1. Längslenkerachse für Fahrzeuganhänger, mit
- einem Achsrohr (2),
- einer Schwingwelle (3), die begrenzt drehbar im Achsrohr (2) angeordnet ist und einen Kopplungsabschnitt (11) aufweist,
- einem Schwinghebel (4), der drehfest mit dem Kopplungsabschnitt (11) der Schwingwelle (3) verbunden ist,
**dadurch gekennzeichnet, dass** der Schwinghebel (4) mittels einer am Schwinghebel (4) befestigten Presshülse (10, 10'), die eine sich in Richtung des benachbarten Endes der Schwingwelle (3) verjüngende Durchtrittsöffnung (13) für den Kopplungsabschnitt (11) der Schwingwelle (3) aufweist und mit Presssitz auf den Kopplungsabschnitt (11) aufgesetzt ist, durch eine Kraftschlussverbindung drehfest mit der Schwingwelle (3) verbunden ist.

2. Längslenkerachse nach Anspruch 1, **dadurch gekennzeichnet, dass** die Durchtrittsöffnung (13) zumindest überwiegend konisch oder keilförmig ist.

3. Längslenkerachse nach einem der vorhergehenden Ansprüche, **dadurch gekennzeichnet, dass** der Kopplungsabschnitt (11) der Schwingwelle (3) eine polygonale Außenkontur aufweist und die Durchtrittsöffnung (13) eine an diese Außenkontur angepasste polygonale Kontur aufweist, derart, dass der Schwinghebel (4) sowohl durch eine Kraftschlussverbindung als auch durch eine Formschlussverbindung drehfest mit der Schwingwelle (3) verbunden ist.

4. Längslenkerachse nach einem der vorhergehenden Ansprüche, **dadurch gekennzeichnet, dass** die Durchtrittsöffnung (13) in einem axialen Endabschnitt (18), der einen axial äußeren Endbereich der Schwingwelle (3) umgibt, in eine Fase (19) übergeht, die zum Anbringen einer versenkten Schweißnaht (22) ausgebildet ist.

5. Längslenkerachse nach einem der vorhergehenden Ansprüche, **dadurch gekennzeichnet, dass** die Durchtrittsöffnung (13) in einem Endabschnitt (18') mittels eines radial nach innen vorstehenden Bunds (27) verengt ist, der einen an einer Stirnfläche der Schwingwelle (3) anliegenden Axialanschlag für die Schwingwelle (3) bildet.

6. Längslenkerachse nach einem der vorhergehenden Ansprüche, **dadurch gekennzeichnet, dass** die Presshülse (10') mittels einer stirnseitig in die Schwingwelle (3) eingeschraubten Sicherungsschraube (28), die in axialer Richtung auf die Presshülse (10') eine Druckkraft ausübt, axial gesichert ist.

7. Längslenkerachse nach Anspruch 6, **dadurch gekennzeichnet, dass** die Sicherungsschraube (28) ein selbstschneidendes oder selbstfurchendes Gewinde (30) zum Einschrauben in die Schwingwelle (3) aufweist.

8. Längslenkerachse nach einem der vorhergehenden Ansprüche, **dadurch gekennzeichnet, dass** die Presshülse (10, 10') den Schwinghebel (4) durchdringt und mit diesem verschweißt ist.

9. Längslenkerachse nach einem der vorhergehenden Ansprüche, **dadurch gekennzeichnet, dass** die Presshülse (10, 10') in einem Endabschnitt (18, 18') einen radial nach außen vorstehenden Bund (23) aufweist, der einen Begrenzungssteg für eine Schweißnaht (24) zwischen der Presshülse (10, 10') und dem Schwinghebel (4) bildet.

## Claims

1. Trailing arm axle for vehicle trailers, having
- an axle tube (2),
- a rocker shaft (3), which is arranged in the axle tube (2) such that it can rotate to a limited extent and has a coupling section (11),
- a rocker arm (4) that is connected with the coupling section (11) of the rocker shaft (3) so as to be fixed against rotation,
**characterised in that** the rocker arm (4) is connected with the rocker shaft (3) by a non-positive fit connection so as to be fixed against rotation, by means of a compression sleeve (10, 10') fixed on the rocker arm (4), which has a through-opening (13) for the coupling section (11) of the rocker shaft (3) that tapers in the direction of the adjacent end of the rocker shaft (3), and which is mounted on the coupling section (11) with a press fit.

2. Trailing arm axle according to claim 1, **characterised in that the** through-opening (13) is at least mainly conical or wedge-shaped.

3. Trailing arm axle according to one of the preceding claims, **characterised in that** the coupling section (11) of the rocker shaft (3) has a polygonal external profile and the through-opening (13) has a polygonal profile that is matched to this external profile in such a way that the rocker arm (4) is connected with the rocker shaft (3) so as to be fixed against rotation by means of both a non-positive fit connection and a positive fit connection.

4. Trailing arm axle according to one of the preceding claims, **characterised in that** the through-opening (13) merges into a chamfer (19) at an axial end section (18) that surrounds an axially external end region of the rocker shaft (3), the chamfer being designed to attach a countersunk welded joint (22).

5. Trailing arm axle according to one of the preceding claims, **characterised in that** the through-opening (13) is constricted at an end section (18') by means of a radially inwardly protruding collar (27), which forms an axial abutment for the rocker shaft (3), which bears against a front face of the rocker shaft (3).

6. Trailing arm axle according to one of the preceding claims, **characterised in that** the compression sleeve (10') is axially secured by means of a securing screw (28) that is screwed onto the front side of the rocker shaft (3) and that exerts a compressive force on the compression sleeve (10') in the axial direction.

7. Trailing arm axle according to claim 6, **characterised in that** the securing screw (28) has a self-tapping or self-threading thread (30) for screwing into the rocker shaft (3).

8. Trailing arm axle according to one of the preceding claims, **characterised in that** the compression sleeve (10, 10') passes through the rocker arm (4) and is welded to this.

9. Trailing arm axle according to one of the preceding claims, **characterised in that** the compression sleeve (10, 10') has a radially outwardly protruding collar (23) at an end section (18, 18'), which forms a delimiting web for a welded joint (24) between the compression sleeve (10, 10') and the rocker arm (4).

## Revendications

1. Essieu à bras tirés pour remorque de véhicule, comportant :
- un tube d'essieu (2),
- un arbre oscillant (3) agencé limité en rotation dans le tube d'essieu (2) et présentant une portion de couplage (11),
- un levier oscillant (4) solidaire en rotation de la portion de couplage (11) de l'arbre oscillant (3),
**caractérisé en ce que** le levier oscillant (4) est raccordé solidaire en rotation de l'arbre oscillant (3) au moyen d'un emmanchement à force faisant appel à une douille de serrage (10, 10') qui présente une ouverture de passage (13) destinée à la portion de couplage (11) de l'arbre oscillant (3) et allant en rétrécissant dans le sens de l'extrémité adjacente de l'arbre oscillant (3) et qui est fixée sur ladite portion de couplage (11) dudit levier oscillant (4) avec un ajustage serré.

2. Essieu à bras tirés selon la revendication 1, **caractérisé en ce que** l'ouverture de passage (13) est au moins majoritairement conique ou en forme de coin.

3. Essieu à bras tirés selon l'une quelconque des revendications précédentes, **caractérisé en ce que** la portion de couplage (11) de l'arbre oscillant (3) présente un contour extérieur polygonal et l'ouverture de passage (13) présente un contour polygonal adapté à ce contour extérieur, permettant un raccord du levier oscillant (4) solidaire en rotation de l'arbre oscillant (3) aussi bien par un emmanchement à force que par complémentarité de forme.

4. Essieu à bras tirés selon l'une quelconque des revendications précédentes, **caractérisé en ce que** l'ouverture de passage (13), dans une portion terminale (18) axiale entourant une zone terminale axialement extérieure de l'arbre oscillant (3), débouche sur un chanfrein (19) conçu pour recevoir un cordon de soudure (22) en renfoncement.

5. Essieu à bras tirés selon l'une quelconque des revendications précédentes, **caractérisé en ce que** l'ouverture de passage (13) est rétrécie dans une portion terminale (18') au moyen d'une collerette (27) faisant saillie radialement vers l'intérieur et formant une butée axiale pour l'arbre oscillant (3) en venant en butée sur une face frontale dudit arbre oscillant (3).

6. Essieu à bras tirés selon l'une quelconque des revendications précédentes, **caractérisé en ce que** la douille de serrage (10') est fixée axialement au moyen d'une vis de fixation (28) vissée frontalement dans l'arbre oscillant (3) et exerçant une force de pression dans le sens axial sur la douille de serrage (10').

7. Essieu à bras tirés selon la revendication 6, **caractérisé en ce que** la vis de fixation (28) présente un filetage autotaraudeur ou autoperceur (30) permettant son vissage dans l'arbre oscillant (3).

8. Essieu à bras tirés selon l'une quelconque des revendications précédentes, **caractérisé en ce que** la douille de serrage (10, 10') traverse le levier oscillant (4) et est soudée à celui-ci.

9. Essieu à bras tirés selon l'une quelconque des revendications précédentes, **caractérisé en ce que** la douille de serrage (10, 10') présente, dans une portion terminale (18, 18'), une collerette (23) qui fait saillie radialement vers l'extérieur et qui forme une nervure de délimitation pour un cordon de soudure (24) entre la douille de serrage (10, 10') et le levier oscillant (4).
